# EUROPEAN PATENT APPLICATION

(11) **EP 2 750 358 A1**
(43) Date of publication of application: **02.07.2014**
(21) Application number: 12306716.7
(22) Date of filing: 31.12.2012
(51) Int. Cl.: H04L 29/08

(54) **A method of managing removal of multimedia content**

(71) Applicant: Alcatel Lucent, 75007 Paris (FR)
(72) Inventor: Mongazon-Cazavet, Bruno, 91620 Nozay (FR); Randriamasy, Claire-Sabine, 91620 Nozay (FR)
(74) Representative: Novagraaf Technologies

(57) **Abstract**

A method of managing removal of multimedia content (1), in a client/server communication network, comprising the step of storing (45), in an obituary (3), a reference (2) to a removed multimedia content (1).

## Description

### TECHNICAL FIELD

The technical field is the one of managing removal of multimedia content, in a client/server communication network, such as Internet.

### BACKGROUND

The present disclosure is related to a client/server communication network able to deliver multimedia content on request. Internet, based on HTTP protocol and the World Wide Web, WWW, is a good example of such a client/server communication network.

Using such a client/server communication network, a client is able to request a given multimedia content from a server. In such a client/server communication network a huge amount of multimedia contents may be managed. However, when it comes to manage removed multimedia contents, current protocols fail to provide sufficient semantics so to clearly instruct a client/requester that a multimedia content has been removed and shall no longer be referred to. As a consequence, the communication network maintains and propagates, in a pandemic manner, a significant number of dead references pointing to no longer existing multimedia contents.

For the WWW, given its growth perspectives, the average lifespan of a multimedia content unit/web page being less than 100 days, and the average number of references/links pointing to a web page being of 10 to 60, this may leads to a fail in the coming years.

Such a problem impacts both WWW end-users and intermediate WWW caching servers.

### SUMMARY

A first embodiment concerns a method of managing removal of multimedia content, in a client/server communication network, comprising the step of: storing, in an obituary, a reference to a removed multimedia content.

According to another feature, said method further comprises the steps of: checking out said obituary for a reference to an unavailable multimedia content, returning a dedicated error if a reference to said unavailable multimedia content is found.

According to another feature, a reference to a multimedia content comprises the whole multimedia content or a partial multimedia content or an address pointing to said multimedia content.

According to another feature, a reference to a multimedia content comprises a partial multimedia content when an address is not enough to identify said multimedia content.

According to another feature, the communication network is Internet and uses HTTP protocol and a multimedia content comprises a web page.

According to another feature, an address comprises a universal resource identifier, URI.

According to another feature, said dedicated error is represented by a new error code, preferably an HTTP error code 6xx.

Another embodiment concerns an obituary to manage removal of multimedia content, in a client/server communication network, comprising: a store for storing references to removed multimedia contents, a checker for checking out said store for a reference to multimedia content and indicating if said reference is contained in said store.

According to another feature, said obituary is organized as a server, able to serve obituary needs of at least one multimedia content server through the communication network.

Another embodiment concerns a multimedia content server, in a client/server communication network, able to use such an obituary to manage removed multimedia content.

According to another feature of the multimedia content server, said obituary is a local module, comprised in the multimedia content server and dedicated to said multimedia content server.

According to another feature of the multimedia content server, said obituary is a distant server accessed through the network.

### BRIEF DESCRIPTION OF THE DRAWINGS

Others features, details and advantages of the invention will become more apparent from the detailed illustrating description given hereafter with respect to the drawings on which:
Figure 1 illustrates a multimedia content request toward an existing multimedia content,
Figure 2 illustrates a multimedia content request toward a removed multimedia content, according to prior art,
Figure 3 illustrates a multimedia content request toward a removed multimedia content, according to an embodiment,
Figure 4 illustrates a recording step,
Figure 5, respectively 6, illustrates a checking step with a positive result, respectively with a negative result,
Figure 7 illustrates a recording step in server architecture,
Figure 8 illustrates a checking step in server architecture.

### DETAILED DESCRIPTION

The following detailed description is sometimes provided with the features and vocabulary of Internet and HTTP, considered to be more familiar to the reader, However, this must not limit the scope of the claims.

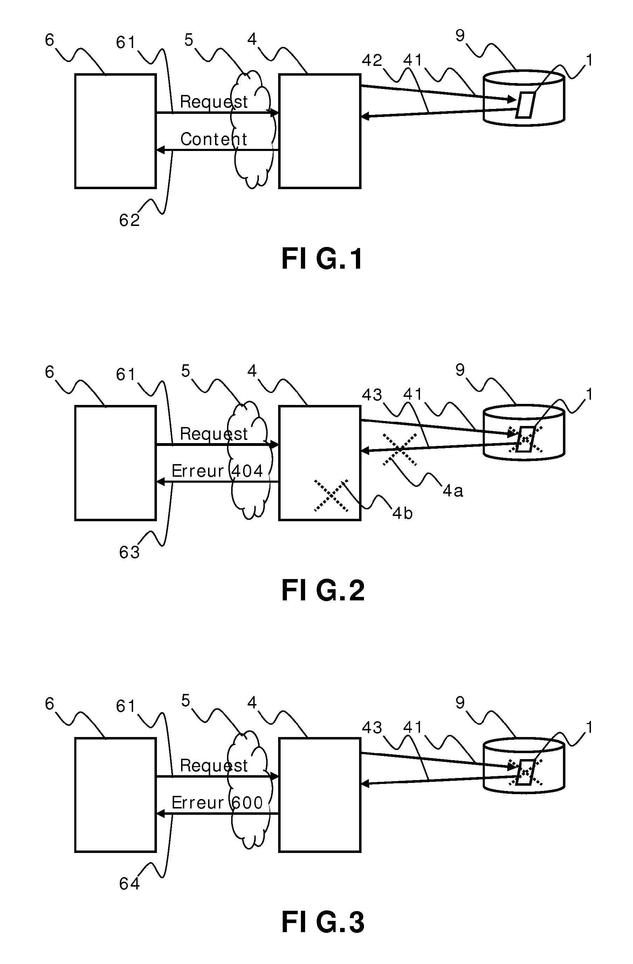

According to figure 1, is illustrated an embodiment, concerning both the prior art and the present disclosure. It shows a client 6 requesting a multimedia content 1. To do so, said client 6 sends a request 61. Said request 61 is carried over by the communication network 5 to a multimedia content server 4 able to serve it. Said request 61 typically comprises a means for identifying the requested multimedia content 1, e.g. in the form of an address to said multimedia content 1. In the case of figure 1, said multimedia content 1 is available in a repository 9 managed by said multimedia content server 4. The server 4 then fetches 41 and retrieves 42 said multimedia content 1 from said repository 9. The server 4 is then able to positively answer the request 61 by providing back 62 said multimedia content 1 to the client 6.

According to figure 2, is illustrated an embodiment, concerning only the prior art, in order to show the problem. The client 6 sends a request 61 to a multimedia content 1. Said request 61 is carried over by the network 5 to a multimedia content server 4 able to serve it. However, in the case of figure 2, said multimedia content 1 is no longer available, because in the meantime it has been removed. When the server 4 fetches 41 said multimedia content 1 from said repository 9, it receives back a negative answer 43. The server 4 is not able to answer the request 61 and instead of providing back 62 said multimedia content 1 to the client 6, the server 4 delivers an error message 63 to the client 6. The problem arises from the fact that the server uses an all-purpose error message 63 with a too broad meaning.

E.g. in HTTP protocol, an HTTP error 404 is typically used to depict the present case of a removed multimedia content 1. However said HTTP error 404 is also used for any reason leading the server 4 to be unable to correctly provide 62 the requested multimedia content 1. A same HTTP error 404 may also be used when a returning link is even temporarily broken as figured by cross 4a. A same HTTP error 404 may also be used when the server 4 itself encounters an internal problem, as figured by cross 4b. This leads to a confusion where an all-purpose returned error message 63 lacks of real information to be useful to the requester/client 6.

According to figure 3, is illustrated an embodiment, showing what the present disclosure intends to do. The client 6 sends a request 61 to a multimedia content 1. Said request 61 is carried over by the network 5 to a multimedia content server 4 able to serve it. However, in the case of figure 3, said multimedia content 1 is no longer available, because in the meantime it has been removed. When the server 4 fetches 41 said multimedia content 1 from said repository 9, it receives back a negative answer 43. The server 4 is not able to answer the request 61 and instead of providing back 62 said multimedia content 1 to the client 6, the server 4 delivers an error message 64 to the client 6. The difference between prior art, in this case, is that, first the server 4 is able to detect that said requested multimedia content 1 has been effectively removed, and second it uses a dedicated distinct error message 64 to clearly indicate to the client 6 that said requested multimedia content 1 has been effectively removed or at least one other error message 63 to indicates any other reason leading the server 4 to be unable to correctly provide 62 the requested multimedia content 1.

According to the present disclosure, such a behavior is obtained through two separated steps.

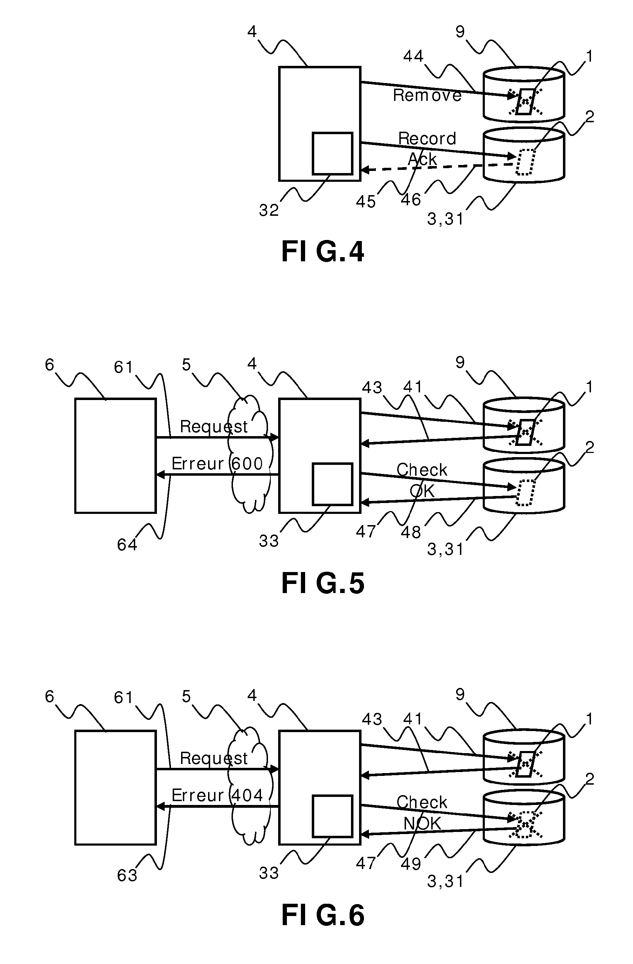

A first step, that can be called storing or recording step occurs when a multimedia content 1 is about to be voluntarily removed. Before, during or after, but rather concomitantly, with the removal of a multimedia content 1, a reference 2 to said multimedia content 1 is stored in an obituary 3, thus recording the removal action. This is illustrated by figure 4. A server 4 managing multimedia contents contained in repository 9, intends to remove a given multimedia content 1. Said removal is indicated by a remove order 44, effectively deleting said multimedia content 1 or ordering the repository to do said deletion/removal. Concomitantly, the server 4 stores a reference 2 to said removed multimedia content 1. Said storing 45 is done in an advantageously purposely provided repository called here an obituary 3. To do so the server 4 sends a recording/storing message 45 to said obituary 3 requesting such a storing 45 of said reference 2. In response said obituary 3 may or not, depending on the embodiment, acknowledge 46.

It is important to note that the storing step is a voluntary one. A server 4 may always select important multimedia contents that it wants to be managed this way when removed, from secondary multimedia contents that can still be simply removed, without being so managed, and still be treated as they currently are.

A second step, that can be called a checking step, is triggered when a multimedia content 1 is requested and cannot be found. In such a case, the presence of a reference 2 to said unavailable multimedia content 1 is checked in said obituary 3. If this check positively ends, it can be asserted that said unavailable multimedia content 1 has expressly been removed, and a dedicated error, clearly indicating this fact of express removal, can then be returned to a client/requester 6. This is illustrated with reference to figures 5 and 6. A client 6 sends a request 61 to a multimedia content 1. Said request 61 is carried over by the network 5 to a server 4 able to serve it. However, in the case of figure 5, said multimedia content 1 is no longer available. When the server 4 fetches 41 said multimedia content 1 from said repository 9, it receives back a negative answer 43. The server 4 is not able to answer the request 61. Since said multimedia content 1 is unavailable, the server 4 further proceeds to an obituary check. Said checking step is done by sending a check request or message 47 to the obituary 3. Said check request 47 typically comprises a reference 2 to said requested multimedia content 1. The store 31 of the obituary 3 is then checked to verify if it comprises a reference 2 to said multimedia content 1. Here two cases may occur.

Figure 5 illustrates the first of these two cases, when said check 47 returns a positive result 48, since a reference 2 to said multimedia content 1 is present in said obituary 3. In such a case, the server 4 knows that said multimedia content 1 has been expressly removed. It can then answer back to the requester/client 6 clearly indicating this fact. The server 4 can then returns 64 a dedicated error indicating that said multimedia content 1 has been expressly removed. The requester/client 6 can then act accordingly, and upgrades its records.

Figure 6 illustrates the second of these two cases, when said check 47 returns a negative result 49. In such a case, the server 4 knows that said multimedia content 1 has not been expressly removed. It can then answer back to the requester/client 6 using an usual all purposes error message 63, that is, e.g. HTTP error 404 in a HTTP protocol environment. Despites said answer is not clearly defined, it is however clearer than in its prior art definition: the voluntarily removal case is here excluded. Here at reception of said usual all-purposes error message 63 the requester/client 6 is not able to know the exact reason of the unavailability of the multimedia content 1, but it at least knows that it has not been expressly removed. Said with other words, when no reference 2 to an unavailable multimedia content 1 can be found in the obituary 3, the server 4 proceeds as usual, according to prior art, while thus providing more information.

A multimedia content 1 is represented in an obituary 3 by a reference 2 to it. According to a first embodiment said reference 2 may be the multimedia content 1 itself, which is then copied and stored into said obituary 3. However such an embodiment may lead to important volumes in terms of storage.

According to another embodiment, said reference 2, as stored in the obituary 3, may be an address pointing to the multimedia content 1. Such an embodiment results in a drastic reduction of storage volume.

However it may happens, in some cases that an address appears to be insufficient. A problem may occur at checking time. As previously described, a request 61 for a multimedia content 1 comprises a means for identifying the requested multimedia content 1. This means for identifying is, at checking time, compared to the references 2 to multimedia contents, as stored in the obituary 3. This means for identifying generally comprises an address to said requested multimedia content 1. It is important, for the checking result, to be able to know if a requested multimedia content 1, as defined by its means for identifying is comprised in multimedia contents as represented by a given reference 2.

If an address uniquely identifies a multimedia content 1, then said address can be used as a reference 2 to represent it in an obituary 3. When said multimedia content 1 would be requested, the request 61 would comprises its address, and said address can be compared to the address stored in the obituary 3.

A problem may occur when an address may identify several multimedia contents 1. This may be the case, e.g. with dynamic web pages in HTTP protocol. In the case of a dynamic web page, the request to said web page is a call to a service, with or without parameters. In return said service builds and provides a web page. The removal of said service, which is a way to retrieve some multimedia content 1, may be treated by mean of an obituary 3. In such a case the address, here the address of said service, must be stored in the obituary 3, but also any element allowing unique identifying of said multimedia content 1, and thus necessary for disambiguation purposes, such as any parameter. In such a case, a multimedia content 1 is represented in an obituary 3 by a partial multimedia content, e.g. comprising an address to said multimedia content 1, and said elements allowing a unique identification of said multimedia content 1, such as parameters sent to said service in the request.

The choice of the way to represent a removed multimedia content 1 in an obituary 3 by either an address or a partial multimedia content such as an address completed by some identifying elements must be done at recording time. It can be done through an analysis of the removed multimedia content or set of removed multimedia contents.

An important application of the present teaching is where the communication network is Internet. In such a case the communication network uses HTTP protocol. There, a multimedia content 1 typically comprises a web page, considered to be a multimedia content unit.

In this frame of use, an address typically comprises a universal resource identifier, URI. It may be completed in the dynamic case by identifying elements, being here the instances of the parameters.

As previously described, when a multimedia content 1 is unavailable, and a reference 2 to said multimedia content 1 can be found in an obituary 3, a dedicated error, being a more informed error, different from an all-purposes error, is used to inform the requester/client 6.

According to a first embodiment, said dedicated error can (re)use an existing error code. In the application case of HTTP, numerous HTTP error codes could become available because they are no longer used and could then be redefined to said dedicated error.

According to a second embodiment, said dedicated error can be represented by an error code chosen among unused error codes. Preferably said new error code can be an HTTP error code 600, or any error code between 600 and 699, as denoted by 6xx.

The present disclosure further concerns an obituary 3. An obituary 3, as described before is designed to help managing removal of multimedia content 1 in a client/server communication network 5. An obituary 3 comprises a store 31 for storing 45 references 2 to multimedia contents 1 that are expressly removed by e.g. a multimedia content server 4 in charge of managing such multimedia content 1. Said store 31 is used by the obituary 3 during the recording/storing step to store 45 a reference 2 to a multimedia content 1 when said multimedia content 1 is deleted. Said storing step 45 is done upon request of a manager, e.g. a multimedia content server 4, when it voluntarily removes 44 said multimedia content 1 out of its repository 9.

An obituary 3 may further comprise a recorder 32. Such recorder 32 is a module in charge of managing said store 31, for storing operation 45.

A second task dedicated to an obituary 3 is to check 47 if a reference 2 pertains to said obituary 3, that is, if said reference 2 is present in said store 31. Said task may be allocated to a checker 33. Such checker 33 is a module in charge of, given a reference 2 provided by a requester/server 4, testing 47 if said reference 2 is present or not in the store 31. Then depending on said presence, the checker 33 returns either a positive result 48 or a negative result 49.

Such an obituary 3 may be organized and architectured at least according to two main ways. All configurations in between these two extremes main ways are also possible.

According to a first way, an obituary 3 may be designed as a local module contained in a manager of multimedia content 1 such as a multimedia content server 4. In such a case an obituary 3 is contained in said multimedia content server 4, with all its components, store 31, recorder 32 and checker 33, being part of said multimedia content server 4. In such a case said obituary 3 is typically dedicated to said multimedia content server 4 and manages only references 2 from multimedia contents 1 removed from said multimedia content server 4. This leads to a communication network 5 where each multimedia content server 4 has its own local obituary 3 and internally manages removal of its multimedia contents 1.

This first main way, that may be called local obituary 3, is e.g. illustrated by figures 4-6.

Alternately an obituary may be shared between several multimedia content servers 4, one of said multimedia content servers 4 owning an obituary 3 and offering obituary services to the others multimedia content servers 4.

According to a second ways, an obituary 3 may be designed as a server. In such a case an obituary 3 is self-contained and is an independent module. It comprises all the required components: store 31, recorder 32 and checker 33. In addition, as a server, said obituary 3 comprises necessary services and interfaces to be able to provides its obituary services to any would be client. Said interfaces may typically be designed to be accessed through the network 5. In this server form, said obituary 3 may then offers recording/storing and checking services, so as to serve all the obituary needs of any multimedia content server 4 needing and requesting them. In such a case said obituary 3 is typically not dedicated to one server 4 but may manage references 2 from several multimedia content servers 4. This may lead to a communication network 5, where a single central obituary server 3 manages removed multimedia contents 1 from all multimedia content servers 4.

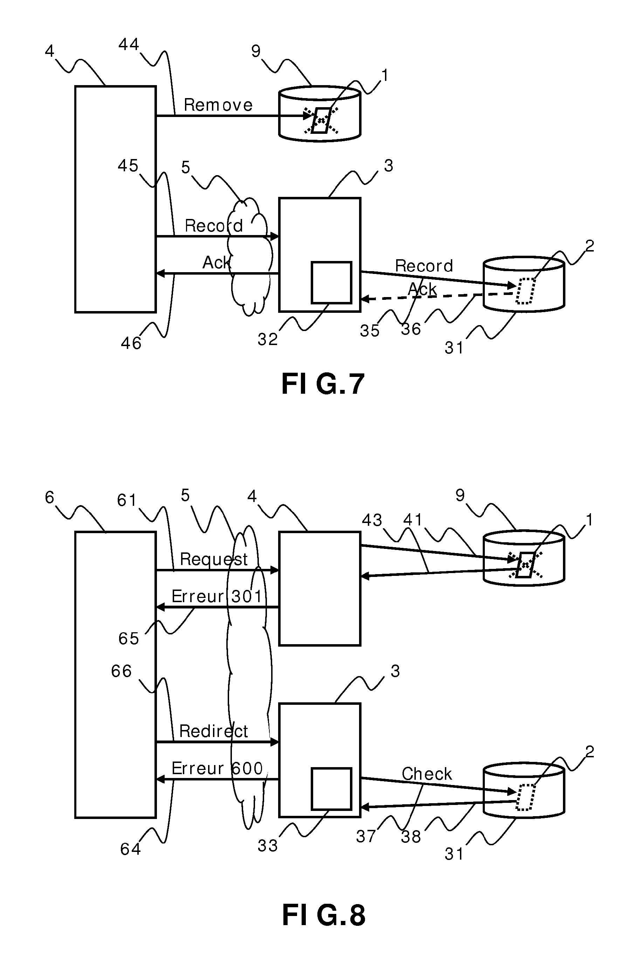

This second main way, that may be called central obituary server 3, is e.g. illustrated by figures 7 and 8.

With reference to figure 7 are illustrated the removing and recording steps. A multimedia content server 4 decides to remove a multimedia content 1. It thus internally gives an order 44 to remove said multimedia content 1 from its repository 9. Concomitantly, it addresses a recording request 45 to an obituary 3, here through the network 5. Said recording request 45 comprises a reference 2 to said removed multimedia content 1. Upon receiving said recording request 45, the obituary 3, by mean e.g. of its recorder 32, records/stores 35 said reference in its store/repository 31. Since it is typically a local operation said store 31 may or not acknowledge 36 said storing. Since it is through the network 5, the obituary 3 here advantageously acknowledges 46 the effective recording in response to the requester/multimedia content server 4.

With reference to figure 8 is illustrated a request to an unavailable multimedia content 1, comprising an obituary checking step.

A client 6 sends a request 61 to a multimedia content 1. Said request 61 is carried over by the network 5 to a server 4 able to serve it. However, in the case of figure 8, said multimedia content 1 is no longer available. When the server 4 fetches 41 said multimedia content 1 from said repository 9, it receives back a negative answer 43. The server 4 is not able to answer the request 61. Since said multimedia content 1 is unavailable, the server 4 here returns 65 a message redirecting the requester/client 6 to the obituary 3 of said server 4. This is done by mentioning that the requested multimedia content 1 has been displaced to said obituary 3. In HTTP protocol, this may be indicated e.g. by an HTTP error 301. Said return message 65 comprises means for finding the new location where the multimedia content 1 has been displaced, typically an address. In this case, the new location so indicated is the location of the obituary server 3.

Thus logically, the client/requester 6, receiving said returns message 65, uses this means for finding the new location and redirects its request, in the form of a request 66 redirected toward the obituary server 3. By doing so, the client 6 is doing itself the obituary checking step. Upon receiving said redirected request 66, the obituary checks 37 its store 31 to verify if it comprises a reference 2 to said requested multimedia content 1. Here the positive result 38 case is illustrated. A reference 2 has been found in the store 31. The obituary 3 may then return a response message 64 comprising said dedicated error, e.g. an HTTP error 600. In the other case, if no reference 2 is found, the obituary 3 would then return an all-purpose error, e.g. an HTTP error 404.

As can be noticed, an obituary server 3 functions quite the same way as a usual multimedia content server 4. It can receive a storing/recording message 45 comprising a reference 2 to store, at recording time. As a multimedia content server 4, it receives an object to store. It can also receive a requesting message 66 comprising a reference 2. To the difference of a multimedia content server 4, an obituary server 3 does not responds by providing the multimedia content 1 corresponding to said reference 2. Instead, it responds by a dedicated error, e.g. HTTP error 600, if it knows/stores said reference 2. The same way as a multimedia content server 4, an obituary server 3 responds by an all-purpose error, e.g. HTTP error 404, if it does not know/store said reference 2.

The present disclosure further concerns a multimedia content server 4 in a client/server communication network 5 able to use such an obituary 3 according to any one the previously described embodiments. Such a multimedia content server 4, with respect to prior art, is designed/modified to manage multimedia content 1, at least the ones it is in charge to, expressly removed, by storing its reference 2 in an obituary 3.

Such a multimedia content server 4 may either comprise said obituary is a local module, comprised in said multimedia content server 4 and preferentially dedicated to multimedia content 1 managed by said multimedia content server 4.

Or, such a multimedia content server 4 may use the services of an obituary server 3. In this case, said obituary server 3 may be a distant server accessed through the network 5.

## Claims

1. A method of managing removal of multimedia content (1), in a client/server communication network (5), comprising the step of:
- storing (35,45), in an obituary (3), a reference (2) to a removed multimedia content (1).

2. The method of claim 1, further comprising the steps of:
- checking out (37,47,66) said obituary (3) for a reference (2) to an unavailable multimedia content (1),
- returning (64) a dedicated error if a reference (2) to said unavailable multimedia content (1) is found.

3. The method of any one of claims 1 or 2, wherein a reference (2) to a multimedia content (1) comprises the whole multimedia content (1) or a partial multimedia content or an address pointing to said multimedia content (1).

4. The method of claim 3, wherein a reference (2) to a multimedia content (1) comprises a partial multimedia content when an address is not enough to identify said multimedia content (1).

5. The method of any one of claims 1 to 4, wherein the communication network (5) is Internet and uses HTTP protocol and wherein a multimedia content (1) comprises a web page.

6. The method of any one of claims 1 to 5, wherein an address comprises a universal resource identifier, URI.

7. The method of any one of claims 2 to 6, wherein said dedicated error is represented by a new error code, preferably an HTTP error code 6xx.

8. An obituary (3) to manage removal of multimedia content (1), in a client/server communication network (5), comprising:
- a store (31) for storing references (2) to removed multimedia contents (1),
- a checker (33) for checking out said store (31) for a reference (2) to multimedia content (1) and indicating if said reference (2) is contained in said store (31).

9. The obituary of claim 8, organized as a server, able to serve obituary needs of at least one multimedia content server (4) through the communication network (5).

10. A multimedia content server (4), in a client/server communication network (5), able to use an obituary (3) according to any one of claims 8 or 9 to manage removed multimedia content (1).

11. The multimedia content server of claim 10, wherein said obituary (3) is a local module, comprised in the multimedia content server (4) and dedicated to said multimedia content server (4).

12. The multimedia content server, of any one of claims 10 or 11 wherein said obituary (3) is a distant server accessed through the network (5).

## Amended claims

### Amended claims in accordance with Rule 137(2) EPC.

**1.** A method of managing removal of multimedia content (1), in a client/server communication network (5), **characterized in that** the method comprises the steps of:
- storing (35,45), in an obituary (3), a reference (2) to an intentionally removed multimedia content (1), wherein the obituary (3) comprises a purposely provided repository,
- upon request of an unavailable multimedia content (1), checking out (37,47,66) said obituary (3) for a reference (2) to the unavailable multimedia content (1).

**2.** The method of claim 1, further comprising the step of:
- returning (64) a dedicated error if a reference (2) to said unavailable multimedia content (1) is found, wherein the error indicates that the unavailable multimedia content (1) is a removed multimedia content (1).

**3.** The method of any one of claims 1 or 2, wherein a reference (2) to a removed multimedia content (1) comprises the whole multimedia content (1) or a partial multimedia content or an address pointing to said multimedia content (1).

**4.** The method of claim 3, wherein a reference (2) to a removed multimedia content (1) comprises a partial multimedia content when an address is not enough to identify said multimedia content (1).

**5.** The method of any one of claims 1 to 4, wherein the communication network (5) is Internet and uses HTTP protocol and wherein a multimedia content (1) comprises a web page.

**6.** The method of any one of claims 1 to 5, wherein an address comprises a universal resource identifier, URI.

**7.** The method of any one of claims 2 to 6, wherein said dedicated error is represented by a new error code, preferably an HTTP error code 6xx.

**8.** An obituary (3) to manage removal of multimedia content (1), in a client/server communication network (5), **characterized in that** the obituary (3) comprises:
- a store (31) for storing references (2) to intentionally removed multimedia contents (1),
- a checker (33) for checking out, upon request of an unavailable multimedia content (1), said store (31) for a reference (2) to the unavailable multimedia content (1) and indicating if said reference (2) is contained in said store (31).

**9.** The obituary of claim 8, wherein the obituary (3) is a server independent of multimedia content servers (4) of the communication network (5), able to perform the method according to claims 1 to 7.

**10.** A multimedia content server (4) comprising an obituary (3) according to claim 8 as a local module.
